Europäisches Patentamt

European Patent Office

Office européen des brevets

(19)

(11) Veröffentlichungsnummer: **0 142 038**
**A1**

# (12) EUROPÄISCHE PATENTANMELDUNG

(21) Anmeldenummer: **84112275.7**

(22) Anmeldetag: **12.10.84**

(51) Int. Cl.⁴: **C 23 F 11/18**
**C 03 C 3/16, C 03 C 4/00**

(30) Priorität: **18.10.83 GB 8327870**

(43) Veröffentlichungstag der Anmeldung:
**22.05.85 Patentblatt 85/21**

(84) Benannte Vertragsstaaten:
**BE CH DE FR IT LI NL SE**

(71) Anmelder: **International Standard Electric Corporation**
**320 Park Avenue**
**New York New York 10022(US)**

(72) Erfinder: **Drake, Cyril Francis**
**1 Church Cottages Peldon Road**
**Harlow Essex(GB)**

(74) Vertreter: **Fritsch, Helmut, Dipl.-Chem. et al,**
**c/o Standard Elektrik Lorenz AG Patent- und**
**Lizenzwesen Postfach 300 929 Kurze Strasse 8**
**D-7000 Stuttgart 30(DE)**

(54) Korrosionsinhibitor für Fahrzeugkühlsysteme.

(57) Eine Vorrichtung zur Korrosionsverhinderung bei flüssigkeitsgekühlten Verbrennungsmotoren aus Aluminium enthaltend ein wasserlösliches Glas, welches in Gebrauch in die Kühlflüssigkeit eintaucht. Durch Auflösen des Glases wird eine genügende Konzentration von Phosphat-, Boratund Metasilicationen in der Flüssigkeit aufrechterhalten, um eine Korrosion des Mottro-intestiors zu verhindern.

EP 0 142 038 A1

0142038

C.F.Drake 92


Korrosionsinhibitor für Fahrzeugkühlsysteme.

Die Erfindung bezieht sich auf eine Vorrichtung zur Verhinderung der Korrosion an flüssigkeitsgekühlten Fahrzeugmotoren durch die Kühlflüssigkeit.

Um das Fahrzeuggewicht und die laufenden Kosten zu vermindern, werden Benzin-und Dieselmotoren in steigender Zahl
aus Aluminiumguß hergestellt. Dieses Material wird jedoch
von den üblichen bei solchen Motoren verwendeten Kühlflüssigkeiten auf der Basis von Wasser durch Korrosion
angegriffen. Insbesondere wird diese Korrosion durch
die Anwesenheit von Frostschutzmitteln auf der Basis von
Diolen beschleunigt, welche verhindern sollen, daß das
Kühlmittel einfriert und dadurch der Motor bei niedrigen
Temperaturen zerstört wird.

Um dies zu verhindern wurden Frostschutzmittel auf Alkoholbasis entwickelt. Diese haben jedoch den Nachteil, daß
der Alkohol verdampft,so daß sich die Wirksamkeit des Materials vermindert. Eine andere Technik besteht darin,
dem Kühlmittel einen Korrosionsinhibitor zuzusetzen,
der unter anderem Borat-Phosphat- und Metasilica tionen
enthält. Diese Zusätze haben jedoch nur eine kurzzeitige
Schutzwirkung, da sich die Metasilikationen niederschlagen und in Siliziumdioxid umwandeln.

0142038

C.F.Drake 92

Aufgabe der vorliegenden Erfindung ist es diese Nachteile zu vermindern oder zu vermeiden.

Gemäß der Erfindung wird eine Vorrichtung als Korrosionsinhibitor für wassergekühlte Aluminiummotoren vorgeschlagen, die einen Körper aus wasserlöslichem Glas enthält, der im Gebrauch in das Motorkühlmittel eintaucht, wobei das Glas beim Auflösen Borat-, Phosphat- und Metasilicationen in einer Rate abgibt, die genügt, um die Korrosionsinhibitorkonzentrationen dieser Ionen in dem Kühlmittel aufrechtzuerhalten.

Es wurde gefunden, daß bestimmte wasserlösliche Gläser eine Auflösungsrate haben, die genügt, die Korrosionsinhibitoren in einem Motorkühlsystem zu ersetzen, so daß einer länger dauernder Korrosionsschutz vorhanden ist.

Die wasserlöslichen Gläser enthalten Phosphorpentoxid, Boroxid und Siliziumdioxid als glasbildende Oxide und enthalten eines oder mehrere Alkalimetalle und gegebenenfalls eines oder mehrere alkalische Erdmetalle und/oder Aluminiumoxid als glasmodifizierende Oxide. Zweck dieser glasmodifizierenden Oxide ist es, die Auflösungsrate des Glases zu steuern. Alkalimetalloxide, typischerweise Natrium- oder Kaliumoxid, erhöhen die Löslichkeitsrate, während Oxide alkalischer Erdmetalle die Löslichkeitsrate vermindern. Wenn daher ein bestimmtes Verhältnis dieser beiden Typen von glasmodifizierenden Oxiden verwendet wird, kann damit eine gewünschte Lösungsrate erzielt werden. Die Technik der Steuerung der Glaslösungsrate ist im einzelnen in der britischen Patentanmeldung Nr. 79 30 041 beschrieben. Bei manchen Verwendungen kann das Glas noch weitere Korrosionsinhibitoren wie z.B. Zinkoxid erhalten.

0142038

C.F.Drake 92

Die Gläser werden hergestellt durch Mischen der abgewogenen Mengen der Bestandteilsoxide oder von Verbindungen, welche beim Erhitzen in diese Oxide zerfallen, und schmelzen der Mischung in einer oxidierenden Atmosphäre, um ein homogenes Material zu erhalten. Das geschmolzene Glas kann dann gegossen werden, z.B. in Stäbe oder in Platten und granuliert werden.

Aus dem Glas kann beispielsweise ein einzelner Körper geformt werden, der z.B. in einem Schraubpfropfen befestigt wird, welcher im Gebrauch so in das Kühlsystem eingesetzt wird, daß der Glaskörper mit der Kühlflüssigkeit in Kontakt steht. Eine andere Ausführungsform besteht darin, daß das Glas in granulierter Form vorliegt und einem perforierten Behälter zum Beispiel einem Säckchen, enthalten ist, der in das Kühlmittel eingehängt wird.

Bevorzugt werden Gläser auf der Basis von Phosphorpentoxid/ Calziumoxid/Zinkoxid verwendet, obwohl die Korrosionsinhibitorvorrichtung nicht auf diese Stoffe beschränkt ist. Vorzugsweise ist der Anteil an Phosphorpentoxid im Glas kleiner als 42 Mol% und vorteilhafterweise kleiner als 40 Mol%.

Die im folgendem genannten Bereiche der Glaszusammensetzung in Mol% ergeben einen guten Korrosionsschutz.

| Bereich 1 | $ZnO$ | 49,8 bis 50,4 |
| | $CaO$ | 18,0 bis 18,5 |
| | $P_2O_5$ | 31,4 bis 31,7 |
| Bereich 2 | $ZnO$ | 31,8 bis 32,3 |
| | $CaO$ | 29,0 bis 29,8 |
| | $P_2O_5$ | 38,2 bis 38,7 |

C.F.Drake 92

| Bereich 3 | ZnO | 23,9 bis 26,3 |
|---|---|---|
| | CaO | 33,6 bis 35,0 |
| | $P_2O_5$ | 40,0 bis 41,3 |

Die verschiedenen Zusammensetzungen und die entsprechenden Lösungsraten sind in den folgenden Tabellen 1, 2 und 3 zusammengestellt.

Tabelle 1

Bereich 1

| Herstellung | | analytische Zusammensetzung | | | Lösungsrate |
|---|---|---|---|---|---|
| Temperatur | Zeit | | Mol% | | |
| °C | h | ZnO | CaO | $P_2O_5$ | mg $cm^{-2}$ $h^{-1}$ |
| 950 | 1 | 50,4 | 18,0 | 31,6 | 0,023 |
| 1050 | 1 | 49,8 | 18,5 | 31,7 | 0,032 |
| 1050 | 1 | 50,1 | 18,5 | 31,4 | 0,034 |
| 1050 | 1 | 49,8 | 18,5 | 31,7 | 0,042 |
| 950 | 4 | 50,3 | 17,6 | 32,1 | 0,028 |
| 950 | 4 | 49,7 | 18,6 | 31,7 | 0,021 |
| 1050 | 4 | 49,6 | 18,4 | 32,0 | 0,027 |
| 1050 | 4 | 51,0 | 17,2 | 31,8 | 0,036 |
| 950 | 16 | 50,1 | 17,9 | 32,0 | 0,021 |
| 1050 | 16 | 50,1 | 17,9 | 32,0 | 0,027 |
| 950 | 64 | 50,2 | 17,8 | 32,0 | 0,023 |
| 1050 | 64 | 49,9 | 18,6 | 31,5 | 0,024 |

0142038

C.F.Drake 92

Tabelle 2

Bereich 2

| Herstellung | | analytische Zusammensetzung | | | Lösungsrate |
| Temperatur | Zeit | | Mol% | | |
| $^{o}C$ | h | ZnO | CaO | $P_2O_5$ | mg cm$^{-2}$h$^{-1}$ |
| --- | --- | --- | --- | --- | --- |
| 950 | 1 | 32,3 | 29,5 | 38,2 | 0,060 |
| 1050 | 1 | 32,1 | 29,2 | 38,7 | 0,098 |
| 1050 | 1 | 31,8 | 29,8 | 38,4 | 0,055 |
| 1050 | 1 | 32,3 | 29,0 | 38,7 | 0,098 |
| 950 | 4 | 31,9 | 29,7 | 38,4 | 0,056 |
| 1050 | 4 | 32,6 | 29,3 | 38,1 | 0,043 |
| 1050 | 4 | 31,6 | 30,7 | 37,6 | 0,073 |
| 1050 | 4 | 32,0 | 30,4 | 37,6 | 0,052 |
| 1050 | 4 | 31,8 | 30,7 | 37,5 | 0,052 |
| 950 | 16 | 32,3 | 29,7 | 38,0 | 0,062 |
| 950 | 16 | 31,8 | 30,5 | 37,7 | 0,053 |
| 1050 | 16 | 31,8 | 30,5 | 37,7 | 0,057 |
| 950 | 64 | 32,0 | 29,6 | 38,4 | 0,83 |
| 1050 | 64 | 31,5 | 30,2 | 38,3 | 0,050 |
| 1050 | 64 | 32,1 | 30,3 | 37,6 | 0,78 |

C.F.Drake 92

Tabelle 3

Bereich 3

| Herstellung | | analytische Zusammensetzung | | | Lösungsrate |
| Temperatur | Zeit | | Mol% | | |
| °C | h | ZnO | CaO | $P_2O_5$ | mg cm$^{-2}$ h$^{-1}$ |
| --- | --- | --- | --- | --- | --- |
| 950 | 1 | 23,9 | 34,8 | 41,3 | 0,056 |
| 950 | 1 | 24,9 | 34,4 | 40,7 | 0,078 |
| 1050 | 1 | 25,0 | 35,0 | 40,0 | 0,067 |
| 1050 | 1 | 26,3 | 33,6 | 40,1 | 0,055 |
| 1050 | 1 | 24,7 | 34,8 | 40,5 | 0,073 |
| 950 | 4 | 24,8 | 34,4 | 40,9 | 0,061 |
| 950 | 4 | 24,6 | 35,4 | 40,0 | 0,090 |
| 950 | 4 | 25,2 | 33,9 | 40,9 | 0,073 |
| 1050 | 4 | 24,9 | 34,5 | 40,6 | 0,087 |
| 950 | 16 | 25,8 | 33,6 | 40,6 | 0,050 |
| 1050 | 16 | 25,1 | 34,6 | 40,3 | 0,063 |
| 950 | 64 | 24,5 | 34,7 | 40,8 | 0,074 |
| 1050 | 64 | 25,6 | 34,0 | 40,4 | 0,070 |

C.F.Drake 92

Repräsentative Glaszusammensetzungen aus diesen Bereichen wurden elektrochemisch auf ihren Korrosionsschutzeffekt geprüft. Es wurde ein Standardtestverfahren verwendet, wobei Glas in einer Testzelle mit einer wässrigen Kaliumchloridlösung (zur Erzielung elektrischer Leitfähigkeit) und versehen mit einer Elektrode aus weichem Stahl und einer nicht reaktiven Bezugselektrode in Lösung ging. Die korrosionsverhindernden Ionen, die durch das Auflösen des Glases freigesetzt werden, erzeugen eine isolierende Schicht auf der Elektrode aus weichem Stahl. Die Qualität dieser Schicht, das ist der Grad des Korrosionsschutzes, wurde bestimmt durch Anlegen einer ansteigenden Spannung an die Stahlelektrode, wobei die Spannung bestimmt wurde, bei der ein Durchbruch durch die Schicht stattfindet und ein Strom zu fließen beginnt. Ein hundertprozentiger Korrosionsschutz ist definiert als theoretisch perfekte Schicht, die keinen Strom fließen läßt.

Gläser der Bereiche 1 und 2 ergeben zwischen 96 % und 98% Korrosionsschutz für einige Stunden, wenn sie in Kontakt mit der Lösung stehen, während die Gläser des Bereiches 3 diese Werte für einen Zeitraum von 30 bis 40 Tagen aufrechterhalten. Bekannte Korrosionsinhibitoren, wie z.B. Zinkphosphat ergeben bei diesem Test einen Korrosionsschutz von etwa 35 %.

Obwohl die beschriebene Korrosionsinhibitorvorrichtung zur Verwendung in Fahrzeugkühlsystemen bestimmt ist, kann sie jedoch auch bei anderen Wasserkühlsystemen verwendet werden.

0142038

C.F.Drake 92

Patentanprüche

1. Vorrichtung zur Korrosionsverhinderung bei wassergekühlten Aluminiummotoren, d a d u r c h   g e k e n n -
z e i c h n e t, daß die Vorrichtung einen Körper aus
wasserlöslichem Glas enthält, der im Gebrauch in das
Kühlmittelt des Motors eintaucht, wobei das Glas beim
Auflösen Borat-Phosphat-und Metasilicationen in einer
solchen Rate freisetzt, daß die korrosionsverhindernden
Konzentrationen dieser Ionen in dem Kühlmittel aufrechterhalten wird.

2. Vorrichtung nach Anspruch 1, dadurch gekennzeichnet,
daß sie einen einzigen Körper aus dem Glas enthält.

3. Vorrichtung nach Anspruch 1, dadurch gekennzeichnet,
daß sie granuliertes Glas in einem perforierten Behälter
enthält.

4. Vorrichtung nach einem der Ansprüche 1, 2 oder 3,
dadurch gekennzeichnet, daß das Glas Zinkoxid enthält.

5. Vorrichtung nach einem der Ansprüche 1 bis 4, dadurch
gekennzeichnet, daß das Glas ein Glas auf der Basis
von Phosphorpentoxid/Calziumoxid/Zinkoxid ist.

6. Vorrichtung nach Anspruch 5, dadurch gekennzeichnet,
daß das Glas weniger als 42 Mol% Phosporpentoxid enthält.

ZT/P21-Fr/rl
02.10.1984

C.F.Drake 92

7. Vorrichtung nach einem der Ansprüche 1 bis 6, dadurch gekennzeichnet, daß das Glas 49,8 bis 50,4 Mol% Zinoxid, 18,0 bis 18,5 Mol% Calziumoxid und 31,4 bis 31,7 Mol% Phosphorpentoxid enthält.

8. Vorrichtung nach einem der Ansprüche 1 bis 6, dadurch gekennzeichnet, daß das Glas 31, 8 bis 32,3 Mol% Zinkoxid, 29,0 bis 29,8 Mol% Calziumoxid und 38,2 bis 38,7 Mol% Phosphorpentoxid enthält.

9. Vorrichtung nach einem der Ansprüche 1 bis 6, dadurch gekennzeichnet, daß das Glas 23,9 bis 26,3 Mol% Zinkoxid, 33,6 bis 35,0 Mol% Calziumoxid und 40,0 bis 41,3 Mol% Phosphorpentoxid enthält.

10. Vorrichtung nach einem der Ansprüche 1 bis 9, dadurch gekennzeichnet, daß das Glas Aluminiumoxid enthält.

11. Verwendung der Vorrichtung nach Anspruch 1 bis 10 als Korrosionsinhibitor bei Fahrzeugmotoren.

**0142038**

Nummer der Anmeldung

Europäisches
Patentamt

**EUROPÄISCHER RECHERCHENBERICHT**

EP 84 11 2275

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 880 528 (SOCIETE ANONYME DES USINES CHAUSSON)<br><br>* Patentansprüche 1-4, 8-11 * | 1-3<br>11 | C 23 F 11/18<br>C 03 C 3/16<br>C 03 C 4/00 |
| Y | * Patentansprüche *<br>--- | 4-10 | |
| X | DE-B-1 200 756 (GEBRÜDER GIULINI)<br><br>* Patentansprüche; Seite 1, linke Spalte, Zeilen 43-49; Seite 1, rechte Spalte, Zeilen 37-39 *<br><br>--- | 1,3,<br>4,5 | |
| X | US-A-4 210 575 (C. DRAKE)<br><br>* Patentansprüche 1,3; Spalte 2, Zeilen 53-55 *<br><br>--- | 1,2,4,<br>10 | |
| | | | RECHERCHIERTE SACHGEBIETE (Int. Cl.4) |
| Y | EP-A-0 068 648 (ITT INDUSTRIES)<br><br>* Patentansprüche 1-3; Seite 7, Zeilen 4-25; Seite 10, Zeile 32 - Seite 11, Zeile 19; Seite 6, Zeilen 1-5 *<br><br>----- | 4-10 | C 23 F 11/00<br>C 03 C 3/00 |

Der vorliegende Recherchenbericht wurde für alle Patentansprüche erstellt.

| Recherchenort | Abschlußdatum der Recherche | Prüfer |
|---|---|---|
| DEN HAAG | 24-01-1985 | TORFS |